Europäisches Patentamt

**European Patent Office**

**Office européen des brevets**

(19)

(11) Publication number: **0 163 753**
A1

## (12) EUROPEAN PATENT APPLICATION

(21) Application number: **84106504.8**

(22) Date of filing: **07.06.84**

(51) Int. Cl.⁴: **F 16 D 3/74**

(43) Date of publication of application: **11.12.85**
**Bulletin 85/50**

(84) Designated Contracting States: **DE FR GB IT**

(71) Applicant: **HONEYWELL INFORMATION SYSTEMS ITALIA S.p.A., Via Martiri d'Italia 10, I-10014 Caluso (Torino) (IT)**

(72) Inventor: **Pessina, Fabio, Via Lura 39, I-20017 RHO (MI) (IT)**

(54) **Rotational drive coupling.**

(57)   Rotational drive coupling 1, in plastic material, is inserted on and restrained to the end of a driving shaft 2 and engages itself with the end of a driven shaft 3.

It comprises a plurality of equal diameter coaxial rings 10–17 suitably spaced each from the other along the nominal rotational axis B–B. Each ring, capable of elastic deformation or bending as to its median plane (P–P), is restrained to the upper and lower one respectively through a first and a second pair of radial and stiff connection spacers.

Coupling 1, presents at the same time high values of compressibility, flexibility and rotational stiffness and is particularly suitable for use in driving multicolor ink-ribbon cartridges of serial printers.

Rotational drive coupling

The present invention relates to a rotational drive coupling which is particularly suitable for use in driving endless ink-ribbon cartridges of high speed printers.

In a printer the driving of the inked ribbon is secured in only one direction by a motor whose driving shaft transmits the rotary motion to the driven shaft of a driving roller disposed inside the cartridge through a coupling keyed to the driving shaft and provided for instance with a tooth for engaging a corresponding diametral slot in the driven shaft.

The main features required to a coupling between the driving shaft of the motor and the driven shaft of the driving roller inside the cartridge are the following:

A) The drive coupling must be elastically compressible so as to engage axially the driven shaft.

   This requirement is essentially when the cartiridge is removable. In fact, when the cartridge is placed into its operating position, the angular positionsof the coupling tooth and of the slot of the driven shaft may not coincide.

   In such case the coupling must be able to axially compress and then expand when, during relative rotation between the unengaged driving shaft and driven shaft, the angular positions of the tooth and slot become coincident so carrying out the coupling of the two shafts.

B) The drive coupling must be flexible so as to tolerate considerable eccentricity between driving shaft and driven shaft. as well as angular misalignment between the two shafts.

This requirement is essential in case of multicolor printers where in the ribbon in the cartridge is constituted by a plurality of contiguous longitudinal bands of different color and the multicolor printing is obtained by suitably tilting the cartridge so that a prefixed band of the ribbon is interposed between the printing elements and the printing support.

C) The drive coupling must have a very high rotational stifness so that the relative slip between driving shaft and driven shaft during the phases of angular acceleration is almost null.

This requirement is essential in case of matrix serial printers wherein the printing of the characters is obtained by dot composition through the selective and subsequent actuation of a plurality of needles moving along the printing line.

In fact in such printers one motor generally provides both the movement along the printing line of a carriage supporting the plurality of needles as well as the driving through suitable gears of the shaft to which the coupling is keyed.

If the coupling has a low rotational stiffness, during the phases of printing carriage and driving shaft acceleration the coupling twistes and causes a relative slip between driving shaft and driven shaft and therefore a non uniform ribbon driving which may compromise the printing quality.

In the prior art many kinds of drive couplings are known, as for instance the one described in British patent N. 1,525,203, but none of them presents at the same time high values of compressibility, flexibility and rotational stiffness.

For an optimized driving of the ribbon, these characteristics are indispensable for a coupling to be used in a multicolor serial printer where the multicolor printing is obtained through the tilt of a multi color ink-ribbon cartridge of removable type and where further a same motor drives the printing carriage and the coupling.

The rotational drive coupling of the present invention combines in an extremely simple and economical structure all of the above-mentioned requirements.

According to the invention the drive coupling, in plastic material, is constituted by a plurality of equal diameter coaxial rings suitably spaced each from the other in the direction of a nominal rotational axis.

Each ring, capable of elastic deformation, is restrained to the conti guous rings through a first and a second pair of radial connection spa cers, such spacers securing a high rotational stiffness of the coupling.

The features of the drive coupling of the present invention will appear clear from the following description of its preferred embodiment and from the enclosed drawings where:

Figure 1 is a front view of the drive coupling of the present invention;

Figure 2 shows in top view according to section A-A of fig. 1 the dri
ve coupling of the present invention.

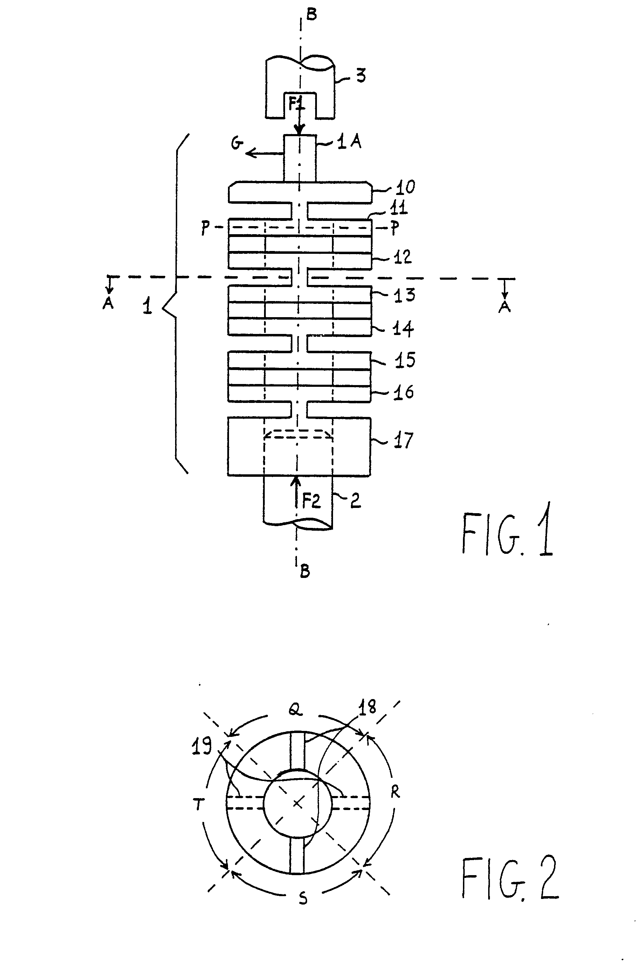

Coupling 1 of fig. 1, in plastic material and having nominal rotational axis B-B, is for instance inserted on and restrained by friction to the end of a driving shaft 2 and engages itself with the end of a driven shaft 3 through a tooth 1A which gets into a diametral slot of shaft 3.

Coupling 1 comprises a disk 10 and a plurality of coaxial rings 11, ... 17 suitably spaced each from the other.

Top disk 10 and bottom ring 17 have a thickness suitably greater than the one of the other ring so that an high stiffness is secured for them. Disk 10 is provided with tooth 1A and bottom ring 17 with the housing for the end of shaft 2.

Each of the intermediate rings is capable of elastic deformation or bending as to the median plane (such as the one shown by dotted line P-Pin Figure 1) whilst retaining a remarkable stiffness to deformation within the median plane.

Each of the rings, as for instance ring 13, is restrained to the upper and the lower ring respectively through a first and a second pair of radial connection spacers 18, 19 (Figure 2), the spacers of each pair preferably extending in a plane perpendicular to the ring planes and containing the nominal rotational axis B-B.

The planes defined by said first and second pair are preferably perpendicular.

The intermediate rings can therefore be considered as divided in four sectors (Q, R, S, T in fig. 2), each restrained in alternative way with its above or below face to one of spacers 18, 19.

It is suitable to analyse, in view of fig. 1 and 2, how the described drive coupling fulfils the above mentioned requirements.

Compressibility. If coupling 1 is subjected to a couple of opposed forces F1, F2 (Fig. 1), which forces also define the nominal direction of the rotational axis, it is compressed because each intermediate ring elastically warps so as to reduce the distance between the face of its sectors not restrained to spacers and the face of the corresponding sectors of the upper and lower ring.

Flexibility. If coupling 1 is subjected to a force G (Fig.1), its axis bends because the sectors of each pair of rings which are not restrained in the direction of force G by spacers tend to approach.

Rotation stiffness. The high rotation stiffness of coupling 1 is secured by the spacers restraining the rings each other. In fact such spacers, because of their reduced height in the direction of the coupling axis, present an almost null elastic deformation during the angular ac

celeration phases of the drive coupling.

It is clear that the drive coupling as described hereinabove is only the preferred embodiment of the invention and numerous variations can be made without departing from the spirit of the invention.

For example disk 10 and rings 11-17 may be replaced with parallel plastic plates of any geometric form.

Further the connection spacers can assume forms and sizes different from that ones disclosed and connection of two contiguous rings/plates may be provided by more than two connection spacers, even if the arrangement shown in Figures 1, 2 is preferable for the purpose of obtaining the drive coupling of the invention by plastic molding, with a mold composed of a minimum number of parts and with a corresponding simpler molding equipment.

Claims

1. Rotational drive coupling having a nominal rotational axis (B-B) characterized by that it comprises: a plurality of parallel plastic plates (10-17) spaced each from the other along said axis, each plate being restrained to the previous and to the subsequent one respectively by a first (18) and a second (19) set of stiff connection spacers, the spacers of said first and second set being located at different sectors of each of said plates, the first end plate (10) being provided with means (1A) for axially engaging a driven shaft (3), the second end plate (17) having clamping means for a driving shaft (2).

2. Drive coupling of claim 1 characterized by that said parallel plastic plates are constituted by equal diameter coaxial rings.

3. Drive coupling of claim 1 characterized by that said first and second set respectively comprises a first (18) and a second (19) pair of spacers, the spacers of each pair being symmetrical as to said rotational axis and the longitudinal planes defined by said first and second couple and containing said axis being perpendicular.

4. Drive coupling of claim 1 characterized by that the thickness of said first and second end plate is greater than that one of the other plates.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 426 389 (R. MAIER) <br> * Whole document * | 1-4 | F 16 D 3/74 |
| | --- | | |
| A | US-A-3 935 716 (H.G. SYMANN) <br> * Whole document * | 1-4 | |
| | --- | | |
| A | FR-A- 808 205 (MICHELIN) <br> * Whole document * | 1-4 | |
| | ----- | | |

TECHNICAL FIELDS SEARCHED (Int. Cl.4)

F 16 D

The present search report has been drawn up for all claims

| Place of search <br> THE HAGUE | Date of completion of the search <br> 31-01-1985 | Examiner <br> BEGUIN C.P. |
|---|---|---|